Europäisches Patentamt

European Patent Office

Office européen des brevets

(19)

(11) Numéro de publication : **0 027 406**
**B1**

(12) # FASCICULE DE BREVET EUROPÉEN

(45) Date de publication du fascicule du brevet :
29.02.84

(21) Numéro de dépôt : 80401408.2

(22) Date de dépôt : 03.10.80

(51) Int. Cl.³ : **F 16 L 23/04**

(54) **Raccord de canalisation comprenant un collier à chaîne.**

(30) Priorité : 15.10.79 FR 7925563

(43) Date de publication de la demande :
22.04.81 Bulletin 81/16

(45) Mention de la délivrance du brevet :
29.02.84 Bulletin 84/09

(84) Etats contractants désignés :
BE CH DE GB IT LI NL SE

(56) Documents cités :
FR-A- 2 041 963
FR-A- 2 223 620
US-A- 3 019 036

(73) Titulaire : **COMMISSARIAT A L'ENERGIE ATOMIQUE**
**Etablissement de Caractère Scientifique Technique**
**et Industriel**
**B.P. 510**
**F-75752 Paris Cedex 15 (FR)**

(72) Inventeur : **Abbes, Claude** ·
**5 Montée du Crét du Loup**
**F-42100 Saint Etienne (FR)**
Inventeur : **De Villepoix, Raymond**
**"La Chatelière"**
**F-26290 Donzere (FR)**
Inventeur : **Rouaud, Christian**
**Les Genêts No 19**
**F-07700 Bourg Saint Andeol (FR)**

(74) Mandataire : **Mongrédien, André et al**
**c/o BREVATOME 25, rue de Ponthieu**
**F-75008 Paris (FR)**

## Raccord de canalisation comprenant un collier à chaîne

L'invention concerne un raccord de canalisation comprenant un collier à chaîne, ce raccord étant destiné à être placé entre deux parties d'un circuit à raccorder, telles que les tuyauteries ou une tuyauterie et une vanne.

L'invention se rapporte plus précisément à un raccord du type comprenant deux embouts susceptibles d'être fixés à deux parties du circuit à raccorder, et un collier ouvert comprenant plusieurs éléments, au moins un ressort en forme de C reliant chacun des éléments et conférant au collier une structure semi-rigide, et des moyens de tension, lesdits éléments coopérant avec les embouts pour solliciter ces derniers en contact étanche lors de la mise en œuvre des moyens de tension, un jeu selon une direction longitudinale par rapport au ressort étant défini entre ce dernier et chacun des éléments.

Un raccord de ce type est connu du brevet US-A-3 019 036. Toutefois, il se caractérise par le fait que les moyens de tension agissent directement sur la lame de ressort, de telle sorte que celle-ci supporte en totalité l'effort de serrage, la liaison entre les différents éléments du collier s'exerçant également au travers du ressort. Il en résulte que l'effort de serrage doit rester limité si l'on ne veut pas risquer une cassure de la lame de ressort.

Un autre raccord représenté sur la figure 1 des dessins annexés, est connu notamment du document FR-A-2 223 620. Il comprend deux embouts coniques 10 fixés aux extrémités des tuyauteries par exemple par soudure, et un collier « à chaîne » 20 constitué par plusieurs éléments ou maillons 22 articulés entre eux par l'intermédiaire d'éléments de liaison 24. Le collier 20 est ouvert et comprend un système vis-écrou 36 et un crochet (non représenté) disposés à ses deux extrémités opposées. La fermeture du collier s'effectue en venant engager l'écrou du système vis-écrou sur le crochet. De plus, chacun des maillons 22 définit deux surfaces tronconiques internes en vis-à-vis susceptibles de venir engager les surfaces tronconiques externes formées sur les embouts pour solliciter ces derniers en rapprochement l'un de l'autre lorsque le collier est fermé, puis serré au moyen du système vis-écrou 36. Le rapprochement des embouts 10 comprime un joint annulaire 19, de telle sorte que l'étanchéité du circuit est assurée.

Les raccords de ce type présentent de nombreux avantages par rapport aux autres systèmes de raccordement connus. Ainsi, ces raccords sont généralement beaucoup moins encombrants que les raccords classiques à brides boulonnées pour des diamètres de canalisation identiques. De plus, le montage et le serrage du raccord peuvent être effectués de façon beaucoup plus rapide et beaucoup plus simple qu'avec des raccords traditionnels. L'effort de serrage peut également être notablement réduit en choisissant judicieusement l'angle d'inclinaison des surfaces coniques formées sur les embouts et sur les maillons du collier. En outre, lorsque le raccord est utilisé pour raccorder deux appareils dans un circuit, la distance séparant ces appareils peut être très faible puisque les moyens de tension du collier sont placés dans le plan de ce dernier, perpendiculairement à l'axe de la tuyauterie, alors que les boulons des raccords à brides boulonnées classiques doivent être introduits axialement. Le collier peut enfin être remplacé ou réutilisé indifféremment sur d'autres embouts identiques, et il n'a pas besoin d'être positionné avant la soudure des embouts sur les tuyauteries.

En dépit de ces nombreux avantages des raccords à embouts utilisant des colliers dits « à chaîne », ce type de raccord n'est pratiquement pas utilisé lorsque le montage et le démontage doivent être effectués à distance, par exemple au moyen d'un manipulateur, ce qui est notamment le cas lorsque les deux parties du circuit à raccorder sont placées derrière une paroi étanche n'autorisant qu'un accès radial limité.

L'absence d'utilisation de ce type de raccords dans ces conditions particulières s'explique par le fait que la mise en place du collier sur les embouts nécessite au moins deux opérations. Ces opérations consistent, d'une part, à maintenir l'une des extrémités du collier et, d'autre part, à enrouler le collier autour des embouts, de façon à amener les deux extrémités du collier à proximité l'une de l'autre pour permettre la fermeture et le serrage du collier par les moyens de tension. Cet inconvénient va en s'accentuant lorsque la section des tuyauteries à raccorder augmente. En effet, par suite des jeux existants nécessairement au niveau des articulations entre les différents maillons du collier, la mise en place de ce dernier peut être délicate lorsque la longueur du collier est importante, certains des éléments constituant le collier pouvant notamment se positionner de travers sur les embouts.

L'invention a précisément pour objet la réalisation d'un raccord de canalisation comprenant deux embouts et un collier à chaîne, ce raccord ne présentant pas les inconvénients des raccords connus de ce type, et pouvant notamment être monté et démonté à distance, par exemple au moyen d'un manipulateur, lorsque les deux parties du circuit à raccorder sont placées derrière une paroi étanche n'autorisant qu'un accès radial. Le raccord selon l'invention n'est cependant pas limité à cette application particulière et sa facilité de montage permet d'en recommander l'emploi même lorsque l'accès au circuit ne présente aucune difficulté particulière.

Ainsi, conformément à l'invention, il est proposé un raccord du type défini précédemment, ce raccord étant caractérisé en ce que les éléments sont articulés entre eux sans passer par le ressort pour former une chaîne aux extrémités de laquelle sont montés les moyens de tension, de telle sorte que les efforts de serrage sont exercés sur ladite chaîne sans être transmis au ressort.

Grâce au ressort qui relie les éléments constituant une chaîne dans le raccord selon l'invention, les opérations de démontage et de remontage peuvent être effectuées successivement au moyen d'un manipulateur, notamment lorsque le circuit véhicule des substances radioactives interdisant toute manipulation manuelle. En effet, le manipulateur peut desserrer totalement le collier, puis le translater à côté des embouts, par exemple pour remplacer un joint défectueux, puis repositionner le collier sur les embouts et le serrer pour rétablir l'étanchéité du raccord. Grâce au jeu prévu entre les éléments articulés et le ressort, ce dernier ne participe pas aux efforts de tension pendant le serrage du collier.

Dans ce type de raccord, les moyens de tension comprennent généralement une tige filetée articulée sur un élément articulé disposé à l'une des extrémités du collier, un écrou de serrage vissé sur la tige, et un crochet formé sur un élément articulé disposé à l'autre extrémité du collier, le crochet étant conçu pour recevoir une pièce d'ancrage portée par l'écrou de serrage lorsque la tige pivote dans le sens correspondant à la fermeture du collier. Selon une autre caractéristique de l'invention, la tige filetée comprend alors une butée sur laquelle vient prendre appui l'écrou de serrage lorsque celui-ci est éloigné de l'extrémité correspondante du collier, ladite butée étant positionnée de telle sorte que le ressort est en tension lorsque le collier est fermé, l'écrou de serrage étant en appui sur ladite butée.

Afin de faciliter encore le montage et le démontage du raccord en permettant de fermer le collier avant que celui-ci ne soit amené au niveau des embouts coniques, le diamètre interne du collier est de préférence supérieur au diamètre externe des embouts lorsque le collier est fermé, l'écrou de serrage étant en appui sur ladite butée.

L'invention a également pour objet un collier prévu pour être utilisé dans un raccord du type défini ci-dessus.

On décrira maintenant, à titre d'exemple non limitatif, un mode de réalisation particulier de l'invention en se référant aux dessins annexés dans lesquels :

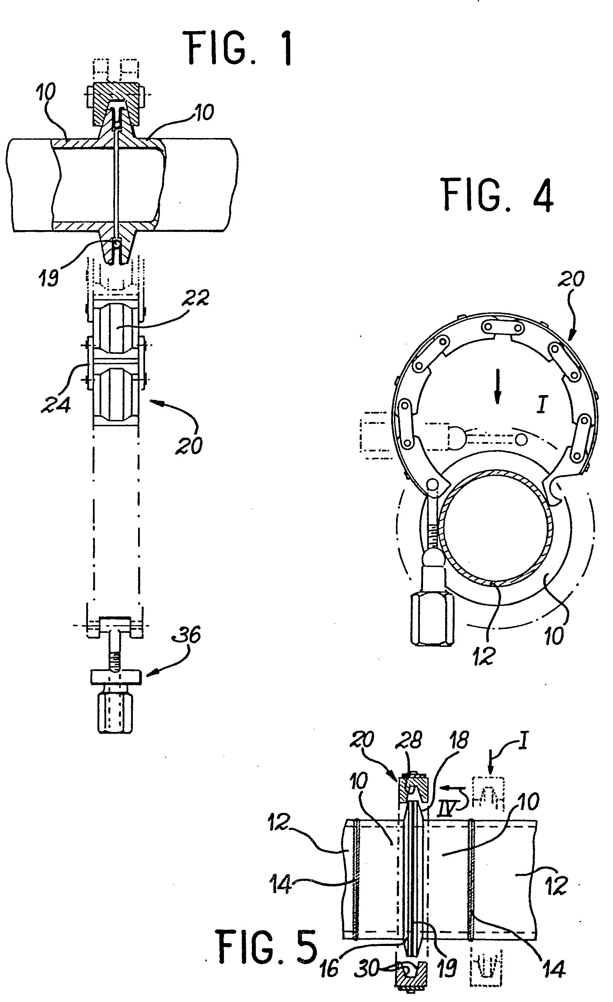

la figure 1 est une vue en coupe transversale partielle d'un raccord de la technique antérieure comprenant un collier à chaîne,

la figure 2 est une vue en coupe transversale partielle d'un raccord réalisé conformément à l'invention, le collier à chaîne du raccord étant représenté en position ouverte,

la figure 3 est une vue comparable à la figure 2 représentant le raccord selon l'invention, après serrage de ce raccord,

la figure 4 est une vue schématique illustrant le montage du collier sur les embouts, et

la figure 5 est une vue de côté, en coupe partielle, illustrant de façon schématique une étape du montage du raccord selon l'invention.

Comme le montre notamment la figure 5, le raccord selon l'invention comprend deux embouts identiques 10 susceptibles d'être fixés de façon étanche à deux parties de circuit à raccorder, telles que deux tuyauteries 12. La fixation des embouts 10 sur chacune des tuyauteries 12 peut être réalisée, par exemple au moyen de soudures 14. Chacun des embouts 10 comprend une bride 16 dont la surface 18 opposée à l'autre embout est tronconique. Les surfaces en vis-à-vis de chacune des brides 16 sont prévues pour recevoir entre elles un joint d'étanchéité annulaire 19 d'un type connu.

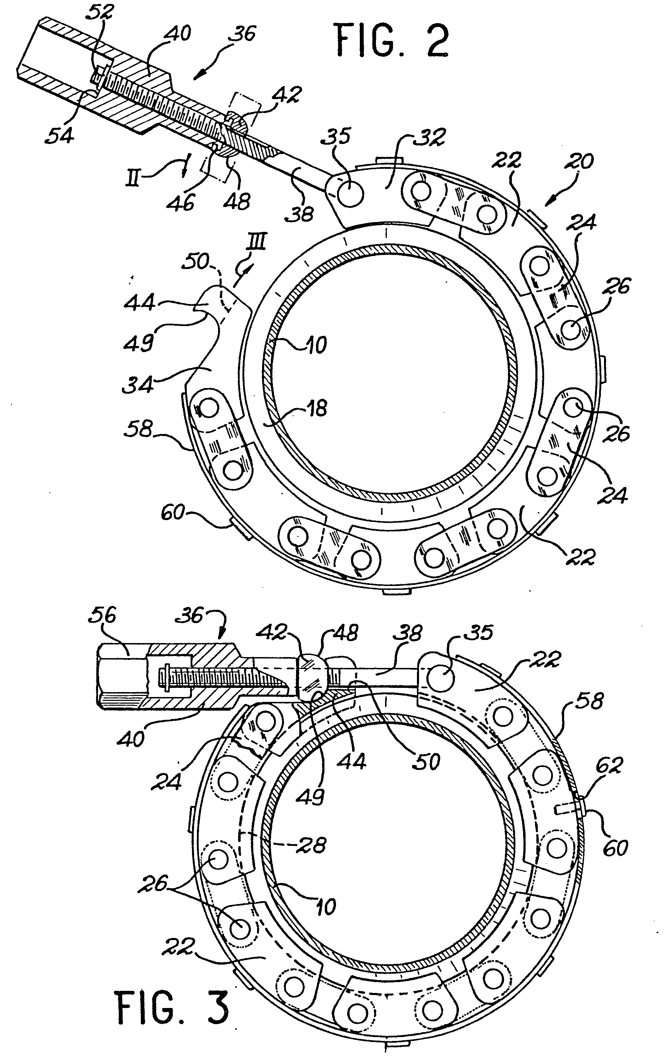

Comme le montrent en particulier les figures 2 et 3, le raccord selon l'invention comprend de plus un collier à chaîne 20 constitué par plusieurs éléments ou maillons 22, articulés entre eux par l'intermédiaire d'éléments de liaison 24, chacun des éléments 24 étant disposé entre deux maillons consécutifs 22 et articulé sur ces derniers par des axes 26. Comme l'illustre en particulier la figure 5, chacun des maillons 22 comprend sur sa face interne un évidement 28 définissant deux surfaces tronconiques en vis-à-vis 30 complémentaires des surfaces 18 formées sur les brides 16 des embouts 10.

Les maillons 22 et les éléments de liaison 24 sont assemblés de manière à constituer une chaîne ouverte qui se termine à chacune de ses extrémités par un maillon, 32 et 34 respectivement. Le maillon 32 est identique aux autres maillons 22, mais il supporte par un axe 35 un système de tension 36. Le système 36 est constitué par une tige filetée 38 solidaire de l'axe 35 ou montée pivotante sur ce dernier, et par un écrou 40 vissé sur la tige filetée 38. Une pièce d'ancrage 42, portée par l'écrou 40, est susceptible de venir prendre appui sur un crochet 44 formé par le maillon 34.

Plus précisément, la pièce d'ancrage 42 est rendue solidaire en translation de l'écrou 40 par un système de rainures 46 qui autorise la rotation de l'écrou par rapport à la pièce d'ancrage. Sur sa face la plus proche de l'axe de pivotement 35, la pièce d'ancrage 42 comprend une surface semi-cylindrique 48 complémentaire d'une surface 49 définie par le crochet 44 sur la face externe du maillon 34. Une fente 50, disposée dans le plan médian du maillon 34, traverse de part en part l'extrémité du crochet 44, de façon à recevoir la tige filetée 38 lorsque la pièce d'ancrage 42 vient se loger dans le crochet 44 comme l'illustre la figure 3.

L'extrémité libre de la tige filetée 38 porte une bague 52 définissant une butée sur laquelle vient prendre appui une surface 54 formée dans un évidement ménagé dans la tête 56 de l'écrou 40, lorsque cet écrou est dévissé au maximum (figure 2). Enfin, la tête 56 de l'écrou 40 définit une surface de préhension, par exemple hexagonale comme l'illustre la figure 3, au moyen de laquelle l'écrou 40 peut être vissé ou dévissé par un outil de serrage approprié (non représenté).

Conformément à la présente invention, et afin d'améliorer la manutention du collier 20 lors du montage et du démontage du raccord, une lame de ressort 58, en forme de C, relie chacun des éléments articulés 22 du collier. Dans le mode de réalisation représenté sur les figures, la section de la lame de ressort 58 est rectangulaire. De plus, cette lame est disposée à la périphérie externe des maillons 22, et elle est reliée à chacun de ces maillons par des systèmes de fixation tels que des vis ou rivets 60 reçus dans des trous oblongs 62 (figure 3) formés dans la lame de ressort 58 selon une direction longitudinale par rapport à cette lame. Le jeu longitudinal qui en résulte permet d'éviter la transmission à la lame de ressort 58 des efforts de serrage appliqués par les moyens de tension 36 au collier 20 lors du serrage du raccord. La présence du ressort 58 ne perturbe donc pas le serrage du raccord, mais elle permet au collier à chaîne 20 de présenter une structure semi-rigide et une forme bien déterminée au repos, quelle que soit son orientation. Ce caractère semi-rigide du collier 20 obtenu grâce au ressort 58 lui permet d'être facilement mis en place et serré, puis démonté, au moyen d'un manipulateur.

La forme du collier 20 définie par le ressort 58 est celle d'un C dont les deux extrémités doivent être légèrement rapprochées comme l'indique la flèche III sur la figure 2, lorsque le système de tension 36 pivote dans le sens de la flèche II autour de l'axe 35, pour fermer le collier 20 en amenant la pièce d'ancrage 42 dans le crochet 44 comme l'illustre la figure 3, l'écrou 40 étant dévissé au maximum comme l'illustre la figure 2. Le collier 20 est ainsi maintenu fermé sous l'action du ressort 58.

Grâce aux caractéristiques particulières du raccord selon l'invention, le collier 20 peut être monté et démonté facilement même lorsque le raccord est peu accessible, par exemple au moyen d'un manipulateur.

Sur un circuit neuf et propre, le collier 20, ouvert comme l'illustre la figure 2, peut être posé sur l'une des tuyauteries à proximité des embouts comme l'illustre la flèche I sur les figures 4 et 5, puis fermé en basculant le système de tension 36 (flèche II sur la figure 2) et en exerçant une légère pression sur le ressort 58 (flèche III). Le collier 20 est donc maintenu fermé sous l'action de ce ressort, comme l'illustre la figure 3. Dans cette position, lorsque la surface 54 de l'écrou 40 est en appui contre la butée 52 de la tige filetée 38, le diamètre interne du collier 20 est légèrement supérieur au diamètre externe des brides 16 formées sur les embouts 10. Le collier peut ainsi être translaté le long de la canalisation 12 jusqu'à ce que les évidements 28 formés dans les maillons 22 viennent en vis-à-vis des brides 16 des embouts. Ce déplacement du collier 20 est représenté schématiquement par la flèche IV sur la figure 5.

Le serrage du raccord s'effectue ensuite en faisant tourner l'écrou 40 dans le sens correspondant au rapprochement des maillons 32 et 34 du collier. Au cours de ce mouvement, la coopération des surfaces tronconiques 30 formées dans les évidements 28 avec les surfaces tronconiques 18 formées sur les brides 16 a pour effet de solliciter ces dernières l'une vers l'autre. Le serrage est réalisé lorsque le joint annulaire 19 disposé entre les brides est suffisamment comprimé pour assurer l'étanchéité du circuit.

Le démontage du raccord s'effectue tout aussi simplement en effectuant dans l'ordre inverse les différentes opérations qui viennent d'être décrites pour le montage du raccord.

Lorsque le raccord doit être démonté sur un circuit pollué, véhiculant par exemple un fluide radioactif, notamment afin de remplacer le joint 19, il n'est pas possible d'intervenir manuellement. Grâce au raccord selon l'invention, les opérations de démontage et de remontage peuvent être effectuées successivement au moyen d'un manipulateur par l'intermédiaire de l'écrou 56. En effet, le manipulateur, en appréhendant l'écrou 56, peut desserrer le collier jusqu'au contact de l'écrou avec la butée 52 (figure 2) puis le translater à côté de l'embout et remplacer le joint défectueux, puis le repositionner sur les embouts et enfin serrer le collier pour étancher le raccord.

Il ressort de la description qui précède que chacune des opérations nécessaires au montage et au démontage du raccord selon l'invention peut être effectuée au moyen d'un système de préhension unique. Cette caractéristique facilite le montage et le démontage du raccord chaque fois qu'un raccord de ce type doit être utilisé. Elle est particulièrement importante dans le cas où l'accès au raccord est difficile et nécessite une manœuvre à distance. Cette situation se présente notamment lorsque le raccord est disposé derrière une paroi étanche de telle sorte que son serrage et son desserrage ne peuvent être effectués qu'au moyen d'un manipulateur. Grâce à la présente invention, il est possible d'utiliser un raccord muni d'un collier à chaîne pour raccorder deux parties d'un circuit en utilisant un manipulateur, ce qui n'était pas possible jusqu'à présent, en dépit des avantages procurés par ce type de raccords.

Bien entendu, l'invention n'est pas limitée au mode de réalisation qui vient d'être décrit à titre d'exemple mais en couvre toutes les variantes. Ainsi, la lame de ressort de section rectangulaire disposée à la périphérie externe des maillons du collier dans le mode de réalisation décrit peut être remplacée par tout autre ressort en forme de C autorisant un débattement longitudinal des maillons par rapport au ressort. Ce ressort peut notamment être constitué par un jonc reçu dans des trous formés dans chacun des maillons du collier, par une lame de section trapézoïdale reçue dans une rainure en queue d'aronde formée à la périphérie externe des maillons du collier, ou encore par un jonc reçu dans des yeux formés dans des vis, ou analogues, solidaires de chacun des maillons. De même, peu importe la forme des maillons et des éléments de liaison, ces derniers pouvant aussi bien être disposés dans le plan médian des maillons ou sur le côté de ceux-ci. Enfin, le raccord lui-même peut être différent du raccord décrit, pourvu que son serrage soit obtenu au moyen d'un collier coopérant avec les embouts pour assurer l'étanchéité du raccord. Ainsi, les embouts et/ou le collier peuvent être droits, des surfaces coniques ou à coin étant alors formées sur un ou plusieurs organes intermédiaires.

## Revendications

1. Raccord du type comprenant deux embouts (10) susceptibles d'être fixés à deux parties de circuit à raccorder, et un collier ouvert (20) comprenant plusieurs éléments (22), au moins un ressort (58) en forme de C reliant chacun des éléments et conférant au collier une structure semi-rigide et des moyens de tension (36), lesdits éléments coopérant avec les embouts pour solliciter ces derniers en contact étanche lors de la mise en œuvre des moyens de tension, un jeu (62) selon une direction longitudinale par rapport au ressort étant défini entre ce dernier et chacun des éléments, caractérisé en ce que les éléments (22) sont articulés entre eux sans passer par le rapport (58) pour former une chaîne aux extrémités de laquelle sont montés les moyens de tension (36), de telle sorte que les efforts de serrage sont exercés sur ladite chaîne sans être transmis au ressort.

2. Raccord selon la revendication 1, dans lequel les moyens de tension comprennent une tige filetée (38) articulée sur un élément articulé (32) disposé à l'une des extrémités du collier, un écrou de serrage (40) vissé sur la tige, et un crochet (44) formé sur un élément articulé (34) disposé à l'autre extrémité du collier, le crochet étant conçu pour recevoir une pièce d'ancrage (42) portée par l'écrou de serrage lorsque la tige pivote dans le sens correspondant à la fermeture du collier, caractérisé en ce que la tige filetée (38) comprend une butée (52) sur laquelle vient prendre appui l'écrou de serrage (40) lorsque celui-ci est éloigné de l'extrémité correspondante du collier, ladite butée étant positionnée de telle sorte que le ressort (58) est en tension lorsque le collier est fermé, l'écrou de serrage étant en appui sur ladite butée.

3. Raccord selon la revendication 2, caractérisé en ce que le diamètre interne du collier (20), lorsqu'il est fermé, l'écrou de serrage (40) étant en appui sur ladite butée (52), est supérieur au diamètre externe des embouts.

4. Collier à chaîne, caractérisé en ce qu'il est prévu pour être utilisé dans un raccord selon l'une quelconque des revendications précédentes.

## Claims

1. A coupling of the type comprising two end-pieces (10) adapted to be fixed to two circuit parts which are to be coupled, and an open collar (20) comprising a plurality of components (22), at least one C-shaped spring (58) connecting all the components and conferring a semi-rigid structure on the collar, and tensioning means (36), the said components cooperating with the end-pieces to stress the latter into leakproof contact when the tensioning means are brought into operation, a clearance (62) along a longitudinal direction relative to the spring being defined between the latter and each of the components, characterised in that the components (22) are articulated to each other without passing through the spring (58) to form a chain at whose ends are mounted the tensioning means (36), whereby the clamping forces are applied to the said chain without being transmitted to the spring.

2. A coupling according to Claim 1, in which the tensioning means comprise a threaded rod (38) articulated on an articulated component (32) arranged at one end of the collar, a clamping nut (40) screwed onto the rod, and a hook (44) formed on an articulated component (34) arranged at the other end of the collar, the hook being designed to receive an anchoring component (42) carried by the clamping nut when the rod pivots in the direction corresponding to the closing of the collar, characterised in that the threaded rod (38) comprises an end-stop (52) on which the clamping nut (40) comes to bear when the latter is away from the corresponding end of the collar, the said end-stop being positioned so that the spring (58) is under tension when the collar is closed, the clamping nut bearing on the said end-stop.

3. A coupling according to Claim 2, characterised in that the internal diameter of the collar (20), when closed, and the clamping nut (40) bears on the said end-stop (52), is greater than the external diameter of the end-pieces.

4. A chain collar characterised in that it is intended for use in a coupling according to any one of the preceding claims.

## Ansprüche

1. Verbindung von der Art, die zwei Ansatzstücke (10), welche an zwei Teilen des zu verbindenden Kreises befestigbar sind, und einen offenen Ring (20) umfaßt, der mehrere Elemente (22), wenigstens eine C-förmige Feder (58), die jedes der Elemente verbindet und dem Ring eine halbsteife Struktur verleiht, und Spannmittel (36) umfaßt, wobei die Elemente mit den Ansätzen zusammenarbeiten, um diese letzteren in dichte Berührung beim Einsatz der Spannmittel zu belasten, und ein Spiel (62) in Längsrichtung in Bezug auf die Feder zwischen dieser und jedem Element festgelegt ist, dadurch gekennzeichnet, daß die Elemente (22), ohne sich über die Feder (58) zu erstrecken, gelenkig miteinander verbunden sind, um eine Kette zu bilden, an deren Enden die Spannmittel (36) derart befestigt sind, daß die Zusammenziehkräfte auf die Kette ohne Übertragung auf die Feder ausgeübt werden.

2. Verbindung nach Anspruch 1, bei der die Spannmittel umfassen, eine Gewindestange (38), die an einem der Enden des Ringes angeordneten, verschwenkbaren Element (32) angelenkt ist, eine auf die Stange aufgeschraubte Spannmutter (40) und einen Haken (44), welcher an einem, an dem anderen Ende des Ringes angelenkten Element (34) ausgebildet ist, wobei der Haken ausgebildet ist, ein von der Spannmutter getragenes Verankerungsteil (42) aufzunehmen, wenn die Stange in dem dem Schließen des Ringes entsprechenden Sinn schwenkt, dadurch gekennzeichnet, daß die Gewindestange (38) einen Anschlag (52) aufweist, an dem sich die Spannmutter (40) abstützt, wenn diese von dem dem Ring entsprechenden Ende entfernt wird, wobei der Anschlag derart positioniert ist, daß die Feder (58) bei geschlossenem Ring gespannt ist und sich die Spannmutter an dem Anschlag abstützt.

3. Verbindung nach Anspruch 2, dadurch gekennzeichnet, daß der Innendurchmesser des Ringes (20), wenn dieser geschlossen ist und sich die Spannmutter (40) an dem Anschlag (52) abstützt, größer als der Außendurchmesser der Ansätze ist.

4. Kettenring, dadurch gekennzeichnet, daß er zur Verwendung bei einer Verbindung nach irgendeinem der vorhergehenden Ansprüche vorgesehen ist.

# FIG. 1

# FIG. 4

# FIG. 5

0 027 406

FIG. 2

FIG. 3